(19) Europäisches Patentamt
European Patent Office
Office européen des brevets

(11) **EP 3 141 721 B1**

(12) **EUROPÄISCHE PATENTSCHRIFT**

(45) Veröffentlichungstag und Bekanntmachung des Hinweises auf die Patenterteilung:
**29.05.2019 Patentblatt 2019/22**

(51) Int Cl.:
**F01N 13/14** *(2010.01)*   **F01N 1/24** *(2006.01)*
**B32B 15/08** *(2006.01)*   **B32B 15/18** *(2006.01)*

(21) Anmeldenummer: **15184579.9**

(22) Anmeldetag: **10.09.2015**

(54) **REFLEKTIERENDES ISOLATIONSSYSTEM**

REFLECTIVE INSULATION SYSTEM

SYSTÈME D'ISOLATION RÉFLÉCHISSANT

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(43) Veröffentlichungstag der Anmeldung:
**15.03.2017 Patentblatt 2017/11**

(73) Patentinhaber: **ISOLITE GmbH**
**67063 Ludwigshafen (DE)**

(72) Erfinder:
 • **Knoll, Michael**
   **67063 Ludwigshafen (DE)**
 • **Kühn, Manuel Peter**
   **67125 Dannstadt-Schauernheim (DE)**

(74) Vertreter: **Grünecker Patent- und Rechtsanwälte PartG mbB**
**Leopoldstraße 4**
**80802 München (DE)**

(56) Entgegenhaltungen:
**EP-A1- 2 444 616      EP-A1- 2 444 617**
**AT-B- 133 379        DE-A1-102010 060 071**
**US-A1- 2009 197 044  US-A1- 2010 035 078**

## Beschreibung

### Gebiet der Erfindung

Die Erfindung betrifft ein Isolationssystem zur thermo-akustischen Isolierung einer zu isolierenden Abgaskomponente, sowie ein entsprechendes Verfahren zur Isolierung einer derartigen Abgaskomponente.

### Stand der Technik

Bevor auf die Wärmedämmung näher eingegangen wird, es ist nützlich, die spezifische Wärmekapazität eines Körpers zu definieren.

Die Wärmekapazität $C$ eines Stoffes ist der Quotient aus der Wärme $Q$, die man dem Körper zuführt, und der dadurch bewirkten Temperaturerhöhung $\Delta T$:

$$C = \frac{Q}{\Delta T} . \quad (1)$$

Die spezifische Wärmekapazität $c$, auch spezifische Wärme genannt, ergibt sich aus der Normierung der Wärmekapazität C auf die Masse des Stoffes. Anders ausgedrückt ist die spezifische Wärmekapazität eines Stoffes die Energie, die benötigt wird, um 1 kg dieses Stoffes um 1 K zu erwärmen:

$$c = \frac{C}{m} = \frac{Q}{m \cdot \Delta T} . \quad (2)$$

Die spezifische Wärmekapazität ist nur schwach temperaturabhängig. Da die spezifische Wärmekapazität c in der Regel als Materialkonstante vorliegt, schreibt man die Formel (2) häufig um als

$$Q = c \cdot m \cdot \Delta T . \quad (3)$$

Bei der Wärmedämmung, beispielsweise bei Abgassystemen von Fahrzeugen, sind grundsätzlich drei Mechanismen zu betrachten, die Wärmeleitung, die Wärmestrahlung und die Konvektion.

Unter Wärmeleitung, auch Wärmediffusion genannt, wird ein Wärmefluss infolge einer Temperaturdifferenz verstanden. Die Flussrichtung ist entsprechend des zweiten Hauptsatzes der Thermodynamik stets von der höheren zur geringeren Temperatur gerichtet. Dabei geht idealerweise keine Wärmeenergie verloren.

Bei Wärmestrahlung wird elektromagnetische Strahlung von einem Festkörper, Fluiden oder Plasmen emittiert. Die emittierte Strahlungsleistung $P$ ist dabei proportional zur vierten Potenz der Temperatur des abstrahlenden Körpers, d.h. $P \propto T^4$ (Stefan-Boltzmann-Gesetz). Im Vakuum ist Wärmestrahlung die einzige Möglichkeit zur Übertragung von Wärmeenergie.

Konvektion oder Wärmeübertragung ist ein weiterer Mechanismus zum Wärmetransport. Konvektion wird durch eine Strömung hervorgerufen, die Teilchen befördert. Beispielsweise kann ein strömendes Fluid Wärme von einer Oberfläche aufnehmen oder an sie abgeben. Eine Ursache für die transportierende Strömung können Temperaturschiede sein. Bei einer erzwungenen Konvektion wird der Teilchentransport durch äußere Einwirkung, zum Beispiel ein Gebläse oder eine Pumpe, hervorgerufen. Bei einer freien Konvektion, wird der Teilchentransport durch einen innerhalb des Mediums vorliegenden Temperaturgradienten hervorgerufen.

In den zu dämmenden Systemen werden häufig Motoren mit hoher Geschwindigkeit gefahren, wodurch eine hohe Geräuschbelastung eintreten kann. Somit kommt zusätzlich zur Wärmedämmung der Aspekt der Schalldämmung hinzu.

Die DE 10 2010 0660071 A1 offenbart einen Teil einer Abgasanlage für einen Verbrennungsmotor mit einer abgasführenden Einrichtung und einer Isolierung für diese Einrichtung sowie einer im Bereich der Isolierung in der Einrichtung gelagerten Sensoreinrichtung, wobei die Sensoreinrichtung einen mit einer Außenwandung der Einrichtung fest verbundenen Stutzen und einen in diesem Stutzen gehaltenen Sensor aufweist.

Die US 2009/197044 A1 offenbart einen Wärmeschild, welcher zusätzlich schallabsorbierenden Eigenschaften aufweist.

Die US 2010/035078 A1 offenbart einen per Hand wickelbaren Hitzeschild und eine entsprechende Konstruktionsmethode wobei äußere und innere Schichten aus Metall sind, und in das Metall Täler und entsprechend Spitzen eingeprägt sind.

Die EP 2 444 617 A1 offenbart einen Abgaskrümmer für einen Verbrennungsmotor mit einem abgasführenden Innenrohr und einer äußeren Ummantelung, wobei die Isolierung als in Form gepresstes Isolierformteil ausgebildet ist und zwischen der Ummantelung und dem Innenraum angeordnet ist, wobei das Isolierformteil ein Isolierfasergewebe und ein Bindemittel enthält.

Die EP2 444 616 A1 offenbart ein heißgasführendes Bauteil, insbesondere für eine Abgasanlage eines Verbrennungsmotors, wobei am Bauteil eine Isolierung angeordnet ist, der wärmereflektierende und/oder wärmeabsorbierende Pigmente zugefügt sind.

Die AT 133 379 B offenbart eine Isoliermatte, bestehend aus glatten und gewellten Papplagen, wobei auf einer glatten Papplage eine Wellpapplage aufgebracht ist, die mit Korkschrot, Torf oder ähnlichen wärmeisolierenden Stoffen belegt ist.

Beispielhaft werden nachfolgend drei bekannten Arten der Dämmung / Isolierung aus der Praxis beschrieben.

1. Luftspaltisolierung

Ein erstes Beispiel ist die Luftspaltisolierung ohne Konvektion. Bei der Luftspaltisolierung ohne Konvektion liegt ein in sich abgeschlossenes Dämmsystem vor, in dem im Wesentlichen ruhende Luft als Dämmmaterial verwendet wird. Ein Vorteil dieser Art der Isolierung ist die geringe spezifische Wärmekapazität der Luft. Somit kann vom System nur eine geringe Wärmemenge aufgenommen werden kann. Durch diesen Umstand bleibt bei wärmegesättigtem Dämmmaterial, also wärmegesättigter Luft, die Wärmeenergie zum größten Teil dem zu isolierenden System erhalten. Weiterhin wird aufgrund der geringen Wärmeleitfähigkeit der Luft der Wärmeverlust durch Wärmeleitung sehr klein gehalten. Ein Nachteil dieser Methode ist hier die Wärmestrahlung, die auf die umliegenden Bauteile einwirken kann. Ferner ist nur eine sehr kleine Temperaturdifferenz über die Dämmzone hinaus möglich. Das bedeutet, die Oberflächentemperatur des Dämmsystems, also der Luft, liegt nur unwesentlich geringer als die Anwendungstemperatur, also die Temperatur des zu isolierenden Systems, beispielsweise der Abgaskomponente. Zusammenfassend lässt sich über die Luftspaltisolierung ohne Konvektion sagen, dass sie einen sehr guten Energieerhalt im zu isolierenden System bietet aber für umliegende Bauteile keinen ausreichenden Schutz durch aufgrund der hohen Oberflächentemperaturen garantiert. Ebenso wird die Umwelt kaum vor akustischen Emissionen geschützt.

2. Luftspaltisolierung mit Konvektion und Hitzeschild

Ein weiteres Beispiel ist die Luftspaltisolierung mit Konvektion und Hitzeschild. Bei der Luftspaltisolierung mit Konvektion und Hitzeschild, klassisch häufig nur als Hitzeschild bezeichnet, liegt ein Dämmsystem vor, welches nicht in sich abgeschlossen ist. Es bietet erweiterte Einflussnahme der Umwelt. Bei dieser Art der Isolierung wird vor dem zu isolierenden Bauteil eine Art Schutzschild auf Abstand angebracht welches die Wärmestrahlung vor umliegenden Bauteilen abfangen soll, um diese zu schützen. Hier zeigen sich oben unter 1. beschriebenen Vor-und Nachteile in umgekehrter Position. Durch den ständigen Schichtwechsel der Luft kann die vom zu isolierenden System abgegebene Wärme immer wieder erneut aufgenommen werden, dies ist auch im Einklang mit Gleichung (3). Dies führt zu erhöhten Energieverlusten in diesem zu isolierenden System, da die aufzunehmende Wärmemenge der Isolierung, also des Luftspalts, praktisch niemals gegen Null gehen kann.
Anders als bei der Luftspaltdämmung ohne Konvektion wird durch den Umstand der ständig wechselnden Luftschichten und damit verbundener Wärmeabführung auf der Oberfläche des Dämmsystems eine bei weitem geringere Temperatur gemessen als es die Ausgangstemperatur ist. Zudem wird durch die Funktion als Schutzschild die Belastung durch Wärmestrahlung umliegender Bauteile stark reduziert. Nachteilig bei diesem System ist die geringe akustische Absorption anzusehen. Zusammenfassend lässt sich über die Luftspaltisolierung mit Konvektion sagen, dass umliegende Bauteile sehr gut vor thermischen Einflüssen geschützt werden, dies aber zu Lasten der Energieerhaltung in dem zu isolierenden System, sowie der Vermeidung akustischer Emissionen in die Umwelt geht.

3. Isolierung mit Füllstoff

Ein drittes Beispiel für Isoliersysteme sind solche, bei denen das Dämmmaterial / Isoliermaterial ein Füllstoff zwischen zu isolierendem System und metallischer Außenschale ist. Im Hochtemperaturbereich sind dies meist Glasfasern, beispielsweise Silikatfasern oder Keramikfasern, welche direkt auf zu isolierende Systeme appliziert werden. Dies ist auch aktuell eine der meist verwendeten Methoden im automobilen Sektor. Diese Isoliermethode bietet die Zwischenlösung zu den beiden erstgenannten. Vorteile sind die niedrigen Oberflächentemperaturen bei geringem Bauraum sowie eine gute akustische Absorption durch das Fasermaterial. In Bezug auf die Energieerhaltung im zu isolierenden System ist es eine Zwischenlösung. Es findet keine merkliche Konvektion statt, weshalb es sich zur Energieerhaltung besser eignet als die Hitzeschildisolierung. Jedoch bietet dieses System eine viel größere aufzunehmende Wärmemenge als die Luftspaltisolation ohne Konvektion, was in diesem Fall eine verminderte Energieerhaltung bedeutet. Ein weiterer Nachteil in Bezug auf die Energieerhaltung ist die fehlende Strahlungsreflexion, bedingt durch die Direktapplizierung welche ausschließlich Wärmeleitung zulässt. Zusammenfassend lässt sich sagen, dass dieses Isoliersystem der Mittelweg zwischen den beiden erstgenannten Systemen ist und dem entsprechend eine der häufigsten angewandten Methoden darstellt.

**Beschreibung der Erfindung**

Angesichts der Nachteile im Stand der Technik ist es Aufgabe der vorliegenden Erfindung, ein alternatives Dämmsystem bereitzustellen, welches das zu isolierende System isoliert und dabei die Umwelt vor Wärmebelastung und akustischer Belastung schützt.
Diese Aufgabe wird durch Isolationssystem gemäß Patentanspruch 1 sowie ein entsprechendes Verfahren gemäß Patentanspruch 8 gelöst.
Die Erfindung stellt bereit: ein Isolationssystem zur thermo-akustischen Isolierung einer zu isolierenden Abgaskomponente, umfassend ein Faserformteil mit einer der zu isolierenden Abgaskomponente abgewandten Fläche, wobei die abgewandte Fläche zumindest teilweise mit einer Ummantelung ummantelt ist, und mit einer Isolierfläche, die der zu isolierenden Abgaskomponente zugewandt ist, wobei das Faserformteil auf die zu isolierende Abgaskomponente derart applizierbar ist, dass sich zwischen einem Teil der Isolierfläche des Faserformteils und der zu isolierender Abgaskomponente mehrere geschlossene Hohlräume bilden, wobei ein vordefinierter Anteil der Isolierfläche des Faserformteils die zu isolierende Abgaskomponente kontaktiert, wobei der vordefinierte Anteil minimal 10 % und maximal 90% beträgt, insbesondere minimal 25 % bis maximal 55 %; wobei die Isolierfläche, die der zu isolierenden Abgaskomponente zugewandt ist, mehrere vordefinierte Einbuchtungen aufweist.

Dabei soll ein Hohlraum als ein abgeschlossenes System, eine Kammer, verstanden werden. Dieses System, also der Hohlraum, wird durch die Isolierfläche des Faserformteils einerseits und die Oberfläche der zu isolierenden Abgaskomponente bzw. der zu isolierenden Bereiche dieser Abgaskomponente begrenzt und damit abgeschlossen. Als abgeschlossenes System bietet der Hohlraum den Vorteil, dass er Luft einschließt. Der Hohlraum wirkt also als ein Luftspeicher. Hierdurch ergibt sich aufgrund von Gleichung (3) eine niedrige aufzunehmende Wärmemenge des Dämmsystems, weil die eingeschlossene Luft nur eine geringe Masse besitzt. Dadurch, dass der Hohlraum abgeschlossen ist, findet praktisch keine merkliche Konvektion statt. Somit bleibt nach dem Erhitzen des Dämmsystems, also des Hohlraums, genauer der Luft im Hohlraum, mit geringer Wärmemenge die nahezu gesamte Wärmeenergie im zu isolierende System. Lediglich an den Kontaktflächen kann eine zusätzliche Wärmeaufnahme stattfinden. Da die Kontaktflächen jedoch klein und begrenzt sind, findet nur eine minimal größere Wärmeaufnahme über die Kontaktfläche statt. In Bezug auf die Wärmeleitfähigkeit bietet sich hier der Vorteil, dass Luft, insbesondere ruhende Luft ein Medium mit einer sehr niedrigen Wärmeleitfähigkeit darstellt. Anders als bei der Luftspaltisolierung ohne Konvektion ergibt sich aus der noch über dem Hohlraum liegenden Faserformteil, das beispielsweise eine Dämmfaser umfasst. Dieses kann insbesondere für niedrige Oberflächentemperaturen sorgen. Somit bleibt nahezu die gesamte Wärmeenergie im zu isolierenden System erhalten und die umliegenden Bauteile sind optimal geschützt, weil die Oberflächentemperaturen relativ niedrig bleiben.

Das Faserformteil, also das Dämmmaterial weist eine zwar etwas höhere aber doch geringe Wärmeleitfähigkeit im Vergleich zur Luft im Hohlraum auf. Die Kontaktfläche des Faserformteils mit dem zu isolierenden System kann aber geringgehalten werden, nämlich beispielsweise lediglich 10%. Unterhalb von 10% können Probleme mit Instabilitäten entstehen. Ein typischer Wert im Sinne eine Obergrenze kann etwa 90% der Isolierfläche betragen, oberhalb von 90% verschwinden die Vorteile gegenüber einer vollständig kontaktierten Isolierfläche zusehends. Es sind aber auch andere Werte möglich, insbesondere ist ein Wert zwischen minimal 25% bis maximal 55 % möglich. Somit ergibt sich eine Art Symbiose aus einer herabgesetzten Wärmeleitfähigkeit des Systems. Aus der noch über dem Hohlraum liegenden Dämmfaser des Faserformteils ergibt sich somit die Möglichkeit, niedrige Oberflächentemperaturen zu erzielen. Somit bleibt praktisch die gesamte Wärmeenergie im zu isolierenden System erhalten und die umliegenden Bauteile sind aufgrund der geringen Oberflächentemperaturen gut geschützt.

In dem Isolationssystem kann die Isolierfläche des Faserformteils mit Farbpigmenten beschichtet sein, die einen TSR, Total Solar Reflectance,-Wert von wenigstens 65% aufweisen, wobei der Anteil der Farbpigmente bezogen auf die Gesamtmasse des Faserformteils zwischen 1 - 5 % beträgt, vorzugsweise zwischen 1,5 - 3 %.

Durch die Beschichtung des Faserformteils auf der warmseitigen Oberfläche mit einem Pigment mit hohem TSR Wert, Total Solar Reflection Value, insbesondere im NIR Bereich, Nah-InfrarotBereich, kann die Rückreflektion der Wärmestrahlung zusätzlich erhöht werden. Dies kann als ein künstlich in den Hohlräumen hervorgerufener Treibhauseffekt angesehen werden. Die emittierte Wärmestrahlung des zu isolierenden Systems, etwa der zu isolierenden Abgaskomponente, wird von der behandelten Oberfläche des Faserformteils reflektiert und größtenteils dem zu isolierenden System rückgeführt. Der absorbierte Teil der Strahlung trägt wiederrum zu der Wärmesättigung des Dämmsystems bei. Beispielsweise können die Farbpigmente ein Polier-Rutil auf Chrom/Antimon/Titan-Basis umfassen.

Dabei kann zwischen der Isolierfläche des Faserformteils und der zu isolierenden Abgaskomponente ein Innenliner eingefügt sein, wobei es sich vorzugsweise um einen metallischen Innenliner handelt.

Falls eine direkte Applizierung, also ein direkter Kontakt des Faserformteils mit der zu isolierenden Abgaskomponente nicht erwünscht oder gar schwierig ist, kann ein metallischer Innenliner verwendet werden. Dieser hat den Vorteil, dass eine De- und Remontierbarkeit des Faserformteils möglichst einfach bereitgestellt werden kann. Zusätzlich kann das Faserformteil, also insbesondere das Fasermaterial geschützt werden.

In dem Isolationssystem kann die Ummantelung eine metallische Ummantelung oder ein duroplastisch- thermoplastischer Kunststoff oder ein Elastomer-Kunststoff umfassen.

Neben den thermischen Eigenschaften zeichnen sich diese Kunststoffe auch durch gute akustische Eigenschaften im Hinblick auf Schalldämmung aus. ab. In Ausführung mit passender metallischer Ummantelung, kann diese typischerweise so vorgesehen werden, dass der Außenmantel zu schließen oder zu öffnen ist. Somit bietet sich die Möglichkeit einer variablen Öffnung oder Schließung der Außenhülle, also der Ummantelung. Damit bietet sich dem System die Möglichkeit, bei geschlossener Hülle schnell auf Betriebstemperatur entsprechend dem Abgassystem zu kommen und bei geöffneter Variante eine Kühlung des Bauteils durch Konvektion hervorzurufen, also Konvektion gezielt zuzuschalten oder abzuschalten.

Dabei können die mehreren vordefinierten Einbuchtungen halbkugelförmige und/oder halbzylinderförmige Einbuchtungen sein, so dass die Hohlräume halbkugelförmig und/oder halbzylinderförmig ausbildbar sind.

Die Einbuchtungen können als Luftkammern, also mit Luft gefüllte Hohlräume verstanden werden, wobei für jeden der Hohlräume die oben genannten Vorteile gelten. Zusätzlich lassen sich symmetrische, einfach herzustellen Formen bilden. Halbzylinderförmige Einbuchtungen haben den Vorteil, dass sie sich herstellungstechnisch / werkzeugtechnisch besonders einfach realisieren lassen und dabei die vorteilhaften Eigenschaften des Isolationssystems aufweisen. Es versteht sich, dass auch andere Körper- beziehungsweise Teilkörperformen gewählt werden können, so dass sich ein oder mehrere Hohlräume bilden lassen.

Die Erfindung stellt ferner eine Abgaskomponente mit einer zumindest teilweise an der Komponente angeordneten Isolierung bereit, wobei die Isolierung als Isolationssystem wie oben beschrieben ausgebildet ist.

Ebenso stellt die Erfindung einen Schalldämpfer bereit, umfassend mindestens eine Abgaskomponente wie oben beschrieben.

Ferner stellt die Erfindung ein Verfahren zum thermo-akustischen Isolieren einer Abgaskomponente bereit, das Verfahren umfassend die Schritte: Bereitstellen eines Faserformteils mit einer der zu isolierenden Abgaskomponente abgewandten Fläche, wobei die abgewandte Fläche zumindest teilweise mit einer Ummantelung ummantelt ist, und mit einer Isolierfläche, die der Abgaskomponente zugewandt ist; Applizieren des Faserformteils auf die Abgaskomponente derart, dass sich zwischen einem Teil der Isolierfläche des Faserformteils und der zu isolierender Abgaskomponente mehrere geschlossene Hohlräume bildet; wobei ein vordefinierter Anteil der Isolierfläche des Faserformteils die zu isolierende Abgaskomponente kontaktiert, wobei der vordefinierte Anteil minimal 10% und maximal 90% beträgt, insbesondere minimal 25% bis maximal 55 %; wobei die Isolierfläche, die der zu isolierenden Abgaskomponente zugewandt ist, mehrere vordefinierte Einbuchtungen aufweist.

Die Vorteile des Verfahrens und seiner Schritte wurden bereits entsprechend dem Isolationssystem oben beschrieben.

In dem Verfahren kann die Isolierfläche des Faserformteils mit Farbpigmenten beschichtet sein, die einen TSR, Total Solar Reflectance, -Wert von wenigstens 65% aufweisen, wobei der Anteil der Farbpigmente bezogen auf die Gesamtmasse des Faserformteils zwischen 1 - 5 % beträgt, vorzugsweise zwischen 1,5 - 3 %.

Beispielsweise können die Farbpigmente ein Polier-Rutil auf Chrom/Antimon/Titan-Basis umfassen.

Dabei kann zwischen der Isolierfläche des Faserformteils und der zu isolierenden Abgaskomponente ein Innenliner eingefügt sein, wobei es sich vorzugsweise um einen metallischen Innenliner handelt.

In dem Verfahren kann das Faserformteil ferner eine der zu isolierenden Abgaskomponente abgewandte Fläche umfassen, wobei die abgewandte Fläche zumindest teilweise mit einer Ummantelung ummantelt ist, wobei die Ummantelung eine metallische Ummantelung sein kann oder einen duroplastisch- thermoplastischen Kunststoff oder einen Elastomer-Kunststoff umfassen kann.

In dem Verfahren können die mehreren, vordefinierten Einbuchtungen halbkugelförmig oder halbzylinderförmig ausgebildet sind.

Hier versteht es sich wiederum, dass auch andere Körper- beziehungsweise Teilkörperformen gewählt werden können, so dass sich mehrere Hohlräume bilden lassen.

Ein Beispiel für ein Anwendungsgebiet des beschriebenen Isolationssystems und des entsprechenden Verfahrens ist der Automobilsektor. Dabei ist es beispielsweise wichtig, die strengen Euronormen zu erfüllen, wonach Abgasenergie und -temperatur auf einem immer höheren Niveau gehalten werden muss, um die nachgeschalteten Aggregate im Abgasstrang wie z. B. DPF, Oxikat, SCR System usw. optimal zu betreiben und den Schadstoffausstoß zu senken. Allgemein geht es darum, Energieverluste des zu isolierenden Systems durch Energieabgabe in Form von Wärmeenergie, d.h. Wärmeleitung, Wärmestrahlung, Konvektion, und auch in Form von akustischer Energie, d.h. Schall, so gering wie möglich zu halten.

Im Folgenden werden Ausführungsformen der Erfindung unter Bezugnahme auf die Zeichnungen beschrieben. Die beschriebenen Ausführungsformen sind in jeder Hinsicht lediglich als illustrativ und nicht als einschränkend anzusehen und verschiedene Kombinationen der angeführten Merkmale sind in der Erfindung eingeschlossen.

## Kurzbeschreibung der Figuren

| Fig. 1 | Schematische Ansicht eines Isolationssystems |
|---|---|
| Fig. 2A u. 2B | Schematische Ansichten von Isolationssystemen mit Innenliner. |
| Fig. 3 | Schematische Ansicht einer Weiterbildung eines Isolationssystems aus Fig. 1 - 3 mit auswechselbarer Ummantelung. |
| Fig. 4 | Schematische Ansicht einer Weiterbildung eines Isolationssystems ohne zu isolierende Komponente. |
| Fig. 5 | Schematische Ansicht einer Weiterbildung eines Isolationssystems. |

**Detaillierte Beschreibung**

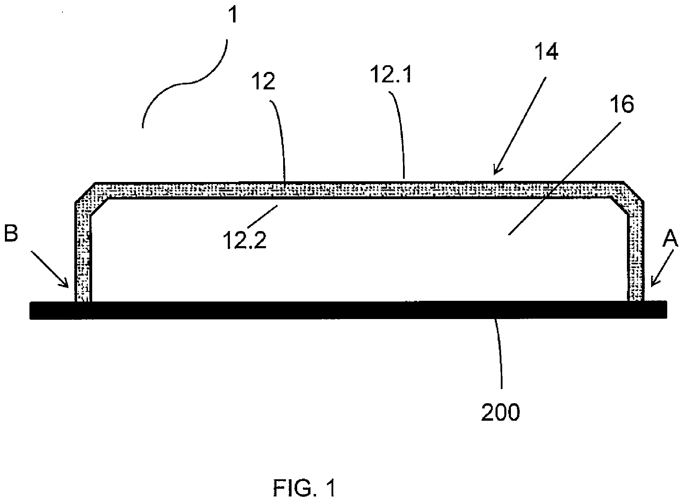

Fig. 1 zeigt eine schematische Ansicht eines Isolationssystems 1 zur thermo-akustischen Isolierung einer zu isolierenden Komponente 200. Die zu isolierende Komponente 200 kann beispielsweise eine Abgaskomponente sein. Das Isolationssystem 1 in Fig. 1 umfasst ein Faserformteil 12, welches ein Dämmmaterial, beispielsweise Fasern oder Vlies, umfasst. Das Faserformteil 12 hat eine der zu isolierenden Komponente 200 abgewandte Seite beziehungsweise Fläche, die mit dem Bezugzeichen 12.1 bezeichnet ist. Diese Fläche 12.1 ist in Fig. 1 mit einer Ummantelung 14 ummantelt. In der schematischen Darstellung in Fig. 1 liegt die Ummantelung 14 praktisch auf der Fläche 12.1 auf.

Das Faserformteil 12 hat ferner eine der zu isolierenden Komponente zugewandte Seite oder Fläche 12.2. Bei der Fläche 12.2 handelt es sich um eine Isolierfläche. Fig. 1 zeigt eine stark vereinfachte Schnittzeichnung. Darin wird eine zu isolierende Komponente 200 durch ein Isolationssystem 1 mit einem Faserformteil 12 isoliert. Das Faserformteil 12 ist dabei derart auf die zu isolierende Komponente 200 appliziert, also aufgebracht, dass es die zu isolierende Komponente 200 nur mit einem Teil der Isolierfläche 12.2 kontaktiert. Dabei erfolgt der Kontakt durch die Isolierfläche 12.2 derart, dass ein Hohlraum 16 gebildet wird. Dabei kann der Hohlraum 16 auch als Kammer verstanden werden. Der Hohlraum 16 wird vollständig von der Isolierfläche 12.2 und der zu isolierenden Komponente 200 umschlossen bzw. begrenzt, also zwischen diesen Elementen gebildet. Der Hohlraum 16 ist typischerweise mit Luft gefüllt und kann auch als ein Luftspeicher angesehen werden. Es versteht sich, dass mehrere Hohlräume ähnlicher Art gebildet werden können und dass Fig. 1 dabei nur einen Hohlraum zeigt.

Der Hohlraum 16 oder mehrere, separate Hohlräume, bilden jeweils ein abgeschlossenes Speichersystem. Somit kann der Hohlraum 16 Luft einschließen. Luft wiederum besitzt eine niedrige Wärmekapazität und kann damit aufgrund von Gleichung (3) nur eine geringe Wärmemenge des zu dämmenden Systems aufnehmen. Es findet praktisch keine Konvektion im Hohlraum 16 statt. Somit bleibt nahezu die gesamte Wärmeenergie im zu isolierenden System 200.

In dem in Fig. 1 gezeigten Beispiel kontaktiert die Isolierfläche 12.2 die Komponente 200 nur im Bereich der Punkte A und B. Es handelt sich also um einen vordefinierten Anteil der Isolierfläche 12.2 des Faserformteils im Bereich A und B, wo die zu isolierende Komponente 200 von der Isolierfläche 12.2 kontaktiert wird. Dabei kann der vordefinierte Anteil typischerweise wenigstens 10% betragen. Ein typischer Wert im Sinne einer Obergrenze kann 90% der Isolierfläche betragen. Andere Werte können ebenfalls möglich sein. Unterhalb von 10% kann es sein, dass es Probleme mit Instabilitäten gibt. Oberhalb von 90% verschwinden die Vorteile gegenüber einer vollständig kontaktierten Isolierfläche zusehends. Es sind aber auch andere Werte möglich, insbesondere ist ein Wert zwischen minimal 25% bis maximal 55 % möglich.

Lediglich dort, wo die Isolierfläche 12 die Komponente 200 kontaktiert, also an den Kontaktflächen im Bereich A und B kann eine zusätzliche Wärmeaufnahme des Faserformteils 12, also des Dämmmaterials stattfinden. Da die Kontaktflächen jedoch klein und begrenzt sind, findet nur eine sehr geringe Wärmeaufnahme über die Kontaktfläche statt. Ein weiterer Vorteil ist, dass das gesamte Faserformteil 12 Dämmmaterial umfasst. Somit wird der Hohlraum 16 im Bereich des Faserformteil 12 zusätzlich von Dämmmaterial umschlossen. Dieses Dämmmaterial kann wiederum dafür sorgen, dass an der der zu isolierenden Komponente abgewandten Seite 12.1 die Oberflächentemperatur deutlich verringert werden kann, so dass durch das Isolationssystem 1 die Umgebung geschützt werden kann. Somit kann nahezu die gesamte Wärmeenergie im zu isolierenden System erhalten bleiben und die umliegenden Bauteile sind gut geschützt.

Die Isolierfläche 12.2 des Faserformteils 12 kann zusätzlich mit Farbpigmenten beschichtet sein, beispielsweise ein Polier-Rutil auf Chrom/Antimon/Titan-Basis, die einen TSR, Total Solar Reflectance, -Wert von wenigsten 65% aufweisen, wobei der Anteil der Farbpigmente bezogen auf die Gesamtmasse des Faserformteils zwischen 1 - 5 % beträgt, vorzugsweise zwischen 1,5 - 3 %. Somit kann zusätzlich auch noch möglicher Energieabgabe durch Wärmestrahlung begegnet werden und die Energie kann noch besser im zu isolierenden System erhalten bleiben.

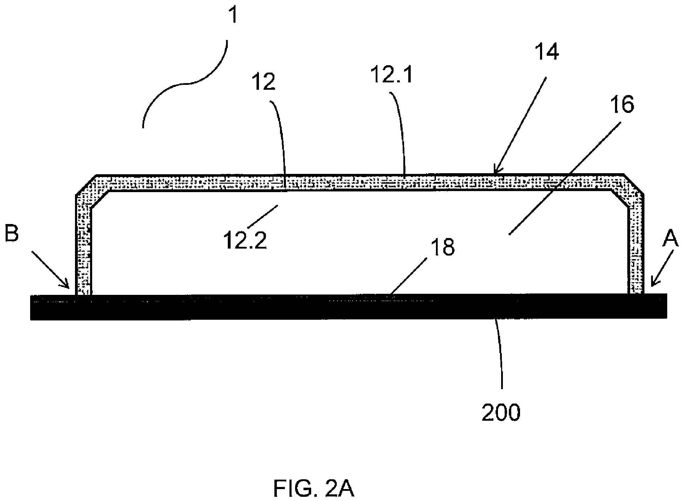

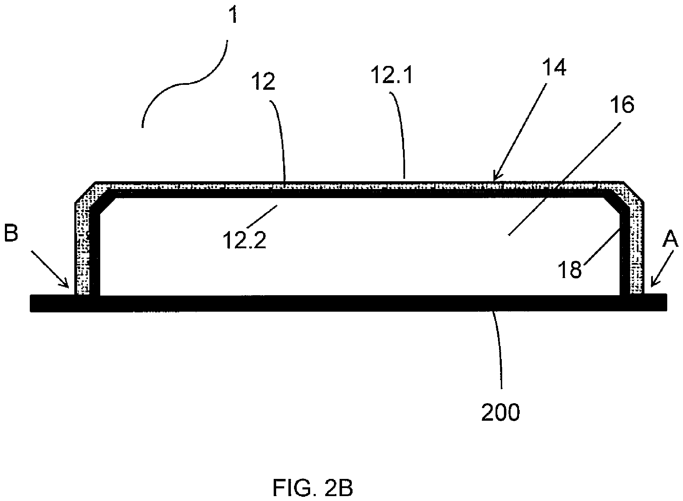

Die Fig. 2A zeigt eine ähnliche schematische Schnittansicht eines Isolationssystems 1 wie die Fig. 1. Dabei sind gleiche Elemente mit gleichen Bezugszeichen versehen und werden hier nicht erneut erläutert. Zusätzlich zeigt Fig. 2A einen Innenliner 18, der zwischen der zu isolierenden Komponente 200 und der Isolierfläche 12.2 des Faserformteils vorgesehen ist. Dabei ist der Innenliner typischerweise aus Metall, beispielsweise aus Edelstahl mit Werkstoffnummer WNr. 1.4541. Dabei ist in Fig. 2A der Innenliner 18 derart dargestellt, dass er auf der Komponente 200 aufliegt und somit eine Art zusätzliche Schicht auf der Komponente 200 bildet. Es versteht sich jedoch, dass der Innenliner 18 auch lediglich im Wesentlichen im Bereich A und B vorgesehen sein kann, also dort, wo in Fig. 1 die Isolierfläche 12.2 die Komponente 200 kontaktiert. In diesen Kontaktbereichen A und B kann der Innenliner 18 zwischen der Komponente 200 und der Isolierfläche vorgesehen sein. Es versteht sich, dass der Innenliner die Größe des anhand von Fig. 1 erläuterten vordefinierten Anteil der Isolierfläche 12.2 des Faserformteils im Bereich A und B, wo die zu isolierende Komponente 200 von der Isolierfläche 12.2 kontaktiert nicht verändert. Der Innenliner 18 kann zum einen dazu dienen, für das Dämmmaterial des Faserformteils 12 einen zusätzlichen Schutz vor mechanischen oder thermischen Beanspruchungen bereitzustellen. Zum anderen kann eine das Faserformteil 12 einfacher montiert bzw. ausgetauscht werde, so dass hiermit eine größere Verarbeitungs- und Wartungsflexibilität bereitgestellt werden kann. Die Fig. 2B zeigt eine Variante der in Fig. 2A gezeigten Ausführungsform. Dabei können die Materialeigenschaften des Innenliners 18 dieselben sein. Ebenso werden in Fig. 2B dieselben Bezugszeichen verwendet. In Fig. 2B ist gezeigt, dass der Innenliner 18 auch so vorgesehen sein kann, dass er die Form der zur Abgaskomponente hin gerichteten Seite des Dämmkörpers, also des Faserformteils 12 annehmen kann. In Fig. 2B liegt der Innenliner 18 an der Seite mit der Isolierfläche 12.2 an. Ein vorzugsweise metallischer Innenliner 18, wie beispielsweise in Fig. 2A und 2B gezeigt, kann verwendet werden, um auf einfache Weise eine De- und Remontierbarkeit des Faserformteils bereitzustellen. Zusätzlich hat ein vorzugsweise metallischer Innenliner eine Schutzfunktion für den Dämmkörper, also das Faserformteil.

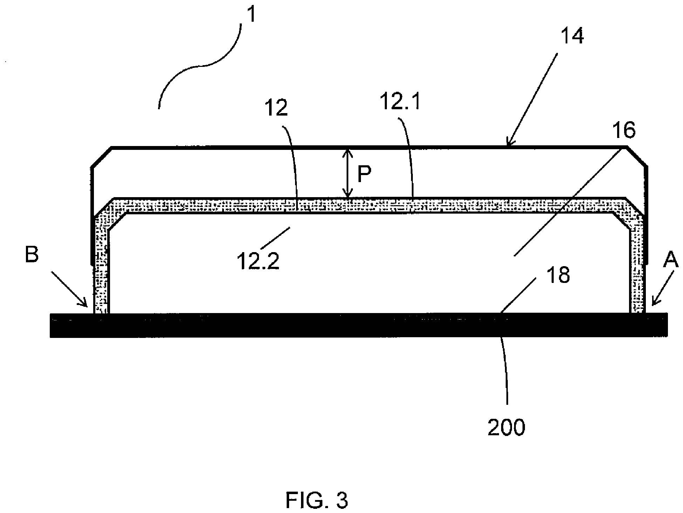

Die Fig. 3 zeigt eine weitere Weiterbildung der Fig. 2A. Dabei werden gleiche Elemente mit gleichen Bezugszeichen bezeichnet. Rein beispielhaft wird in Fig. 3 von der in Fig. 2A gezeigten Ausführungsform ausgegangen. Es versteht sich jedoch, dass die in Fig. 3 gezeigte und im Folgenden beschriebene Ausführungsform auf jeder der im Zusammenhang mit der Fig. 2A und der Fig. 2B beschriebenen Ausführungsformen basieren kann. In der Fig. 3 kann die Ummantelung 14 typischerweise eine metallische Ummantelung umfassen. Ebenso ist es möglich, eine Ummantelung aus einem duroplastisch- thermoplastischen Kunststoff und/oder einem Elastomer-Kunststoff vorzusehen. In Fig. 3 ist die Ummantelung 14 abnehmbar gezeigt. Obwohl in Fig. 14 in einfacher Weise die gesamte Ummantelung 14 als abnehmbar dargestellt ist, versteht es sich, dass man auch eine mehrteilige Ummantelung vorsehen könnte, von der lediglich Teile abnehmbar oder zu öffnen und zu schließen sind, etwa durch einen Klappmechanismus (hier nicht gezeigt). In der Fig. 3 kann die Ummantelung 14 beispielsweise in Richtung des Doppelpfeils P auf das Faserformteil 12 aufgeschoben bzw. von diesem abgezogen werden. Somit ist die Ummantelung 14 in dieser Weiterbildung auswechselbar. In Ausführung mit passender metallischer Ummantelung, kann die Ummantelung so vorgesehen werden, dass der Außenmantel 14 entweder ganz oder teilweise zu schließen oder zu öffnen ist, somit sich eine Außenhülle 14 bietet mit der Möglichkeit einer variablen Öffnung oder Schließung der Außenhülle, also der Ummantelung. Damit bietet sich dem Isolationssystem die Möglichkeit, bei geschlossener Hülle 14 schnell auf Betriebstemperatur entsprechend dem Abgassystem zu kommen und bei geöffneter Variante eine Kühlung der Komponente 200 durch Konvektion hervorzurufen, also Konvektion gezielt zuzuschalten oder abzuschalten.

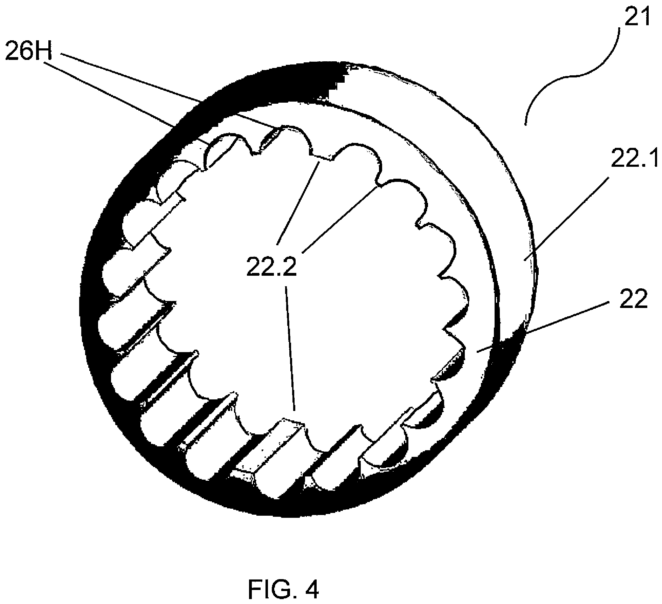

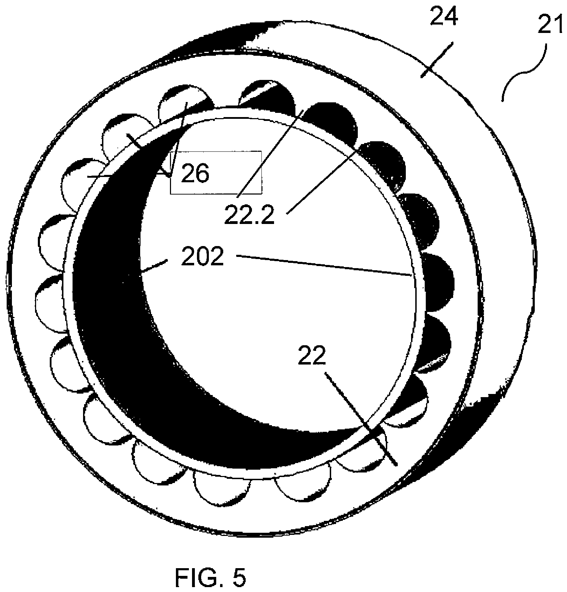

Die Fig. 4 zeigt eine schematische Ansicht einer Weiterbildung eines Isolationssystems 21 entsprechend einer oder mehrerer der Fig. 1 - 3. Dabei ist in Fig. 4 eine zu isolierende Komponente nicht gezeigt, sondern nur das Isolationssystem 21. Das Isolationssystem 21 in Fig. 4 weist wiederum, wie bereits in den Fig. 1 - 3 ein Faserformteil 22 auf mit einer nach außen gerichteten Fläche 22.1. Die zylindrische Form des Faserformteils 22 legt nahe, dass die Fläche 22.1 die von einer zu isolierenden Komponente abgewandte Seite darstellt. Auf der Innenseite des Zylinders weist das Faserformteil 22 Einbuchtungen 26H auf. Obwohl in der Fig. 4 achtzehn Einbuchtungen gezeichnet sind, versteht es sich, dass die Zahl der Einbuchtungen größer oder kleiner sein kann, entsprechend den vorliegenden Anwendungen. Die Einbuchtungen 26H sind in Fig. 4 beispielhaft halbkugelförmig und/oder halbzylinderförmig ausgebildet. Halbzylinderförmige Einbuchtungen haben den Vorteil, dass sie sich herstellungstechnisch / werkzeugtechnisch einfacher realisieren lassen. Es versteht sich aber, dass auch andere Körper oder Teilkörper mit geeigneten geometrischen Formen gewählt werden können, so dass sich ein oder mehrere Hohlräume bilden. Beispielsweise können die Einbuchtungen 26H auch eine Art Wabenstruktur aufweisen. Die Einbuchtungen 26H sind in die Isolierfläche 22.2 vorgesehen. Es versteht sich, dass das in Fig. 4 und nachfolgend in Fig. 5 dargestellte Beispiel eine zylindrische Symmetrie bzw. Rohrsymmetrie zeigt, es aber ebenso andere Körperformen geben kann, die eine geringere Symmetrie aufweisen können.

In Fig. 5 ist das Isolationssystem 21 aus Fig. 4 zum Isolieren einer zu isolierenden Komponente 202, etwa einer Abgaskomponente gezeigt. Die Komponente 202 kann der Komponente 200 aus den Fig. 1 - 3 entsprechen. Die Isolierfläche 22.2 in Fig. 4 besteht aus vielen kleinen Teilflächen, die die Einbuchtungen 26H begrenzen bzw. zwischen den jeweiligen Einbuchtungen liegen. Diese Isolierfläche 22.2, d.h. die vielen kleinen Teilflächen, kontaktiert / kontaktieren die Komponente 202, so dass sich ebenso viele Hohlräume 26 wie Einbuchtungen 26H ergeben. Dabei ergibt die Summe aller kleiner Teilflächen wiederum einen vordefinierten Anteil der Isolierfläche 22.2 des Faserformteils, wo die zu isolierende Komponente 202 von der Isolierfläche 22.2 kontaktiert wird. Dabei liegt der vordefinierte Anteil wiederum typischerweise bei wenigstens 10% und ein typischer Wert im Sinne eine Obergrenze kann etwa 90% der Isolierfläche betragen. Andere Werte sind ebenfalls möglich, insbesondere ist ein Wert zwischen minimal 25% bis maximal 55 % möglich.

In Fig. 5 ist ferner eine äußere Ummantelung 24 gezeigt, die auf der von der zu isolierenden Komponente 202 abgewandten Seite die Fläche 22.1 umgibt.

Die in das Isolationssystem eingebrachten Luftkammern 26 H erzielen den gewünschten Isolationseffekt, so dass ein größerer Anteil der Energie im Abgas verbleibt und praktisch nicht nach außen in die Umgebung dissipiert. Es findet praktisch kein konvektiver Wärmeübergang der Abgaskomponente in die Umgebung statt. Zusätzlich zu den thermischen Eigenschaften ergibt sich auch eine verbesserte akustische Dämmung.

Es ergibt sich beispielsweise Schallabsorption im Bereich von 6,3 kHz bei ca. 90 % liegt.

**Patentansprüche**

1. Isolationssystem (1, 21) zur thermo-akustischen Isolierung einer zu isolierenden Abgaskomponente (200, 202), umfassend:

    ein Faserformteil (12, 22) mit einer der zu isolierenden Abgaskomponente (200, 202) abgewandten Fläche (12.1, 22.1), wobei die abgewandte Fläche (12.1, 22.1) zumindest teilweise mit einer Ummantelung (14, 24) ummantelt ist, und mit einer Isolierfläche (12.2, 22.2), die der zu isolierenden Abgaskomponente (200, 202) zugewandt ist, wobei das Faserformteil (12, 22) auf die zu isolierende Abgaskomponente (200, 202) derart applizierbar ist, dass sich zwischen einem Teil der Isolierfläche (12.2, 22.2) des Faserformteils (12, 22) und der zu isolierender Abgaskomponente (200, 202) mehrere geschlossene Hohlräume (16, 26) bilden;
    wobei ein vordefinierter Anteil der Isolierfläche (12.2, 22.2) des Faserformteils (12, 22) die zu isolierende Abgaskomponente (200, 202) kontaktiert, wobei der vordefinierte Anteil minimal 10% und maximal 90% beträgt, insbesondere minimal 25% bis maximal 55 %;
    wobei die Isolierfläche (12.2, 22.2), die der zu isolierenden Abgaskomponente (200, 202) zugewandt ist, mehrere vordefinierte Einbuchtungen (26H) aufweist.

2. Isolationssystem (1, 21) gemäß Anspruch 1, wobei die Isolierfläche (12.2, 22.2) des Faserformteils mit Farbpigmenten beschichtet ist, die einen TSR, Total Solar Reflectance,-Wert von wenigstens 65% aufweisen, wobei der Anteil der Farbpigmente bezogen auf die Gesamtmasse des Faserformteils zwischen 1 - 5 % beträgt, vorzugsweise zwischen 1,5 - 3 %.

3. Isolationssystem (1, 21) gemäß Anspruch 1, wobei zwischen der Isolierfläche (12.2, 22.2) des Faserformteils (12, 22) und der zu isolierenden Abgaskomponente (200, 202) ein Innenliner eingefügt ist, wobei es sich vorzugsweise um einen metallischen Innenliner handelt.

4. Isolationssystem (1, 21) gemäß wenigstens einem der Ansprüche 1 - 3, wobei die Ummantelung (14, 24) eine metallische Ummantelung oder einen duroplastischthermoplastischer Kunststoff oder ein Elastomer-Kunststoff umfasst.

5. Isolationssystem (1, 21) gemäß Anspruch 1, wobei die Einbuchtungen (26H) halbkugelförmige und/oder halbzylinderförmige Einbuchtungen sind, so dass die geschlossenen Hohlräume (26) halbkugelförmig und/oder halbzylinderförmig ausbildbar sind.

6. Abgaskomponente mit einer zumindest teilweise an der Abgaskomponente (200, 202) angeordneten Isolierung, wobei die Isolierung als Isolationssystem (1, 21) gemäß einem der Ansprüche 1 - 5 ausgebildet ist.

7. Schalldämpfer umfassend mindestens eine Abgaskomponente gemäß Anspruch 6.

8. Verfahren zum thermo-akustischen Isolieren einer Abgaskomponente, umfassend die Schritte:

    Bereitstellen eines Faserformteils (12, 22) mit einer der zu isolierenden Abgaskomponente (200, 202) abgewandten Fläche, wobei die abgewandte Fläche (12.1, 22.1) zumindest teilweise mit einer Ummantelung (14, 24) ummantelt ist, und mit einer Isolierfläche (12.2, 22.2), die der Abgaskomponente zugewandt ist;
    Applizieren des Faserformteils (12, 22) auf die Abgaskomponente derart, dass sich zwischen einem Teil der Isolierfläche (12.2, 22.2) des Faserformteils (12, 22) und der zu isolierender Abgaskomponente (200, 202) mehrere geschlossene Hohlräume (16, 26) bilden;
    wobei ein vordefinierter Anteil der Isolierfläche (12.2, 22.2) des Faserformteils (12, 22) die zu isolierende Abgaskomponente (200, 202) kontaktiert, wobei der vordefinierte Anteil minimal 10% und maximal 90% beträgt, insbesondere minimal 25% bis maximal 55 %;
    wobei die Isolierfläche (12.2, 22.2), die der zu isolierenden Abgaskomponente (200, 202) zugewandt ist, mehrere vordefinierte Einbuchtungen (26H) aufweist.

9. Verfahren gemäß Anspruch 8, wobei die Isolierfläche (12.2, 22.2) des Faserformteils (12, 22) mit Farbpigmenten beschichtet ist, die einen TSR, Total Solar Reflectance, -Wert von wenigstens 65% aufweisen, wobei der Anteil der Farbpigmente bezogen auf die Gesamtmasse des Faserformteils (12, 22) zwischen 1 - 5 % beträgt, vorzugsweise zwischen 1,5 - 3 %..

10. Verfahren gemäß Anspruch 8 oder 9, wobei zwischen der Isolierfläche (12.2, 22.2) des Faserformteils (12, 22) und der zu isolierenden Abgaskomponente (200, 202) ein Innenliner eingefügt ist, wobei es sich vorzugsweise um einen metallischen Innenliner handelt.

11. Verfahren gemäß wenigstens einem der Ansprüche 8 - 10, wobei das Faserformteil (12, 22) ferner eine der zu isolierenden Abgaskomponente (200, 202) abgewandte Fläche (12.1, 22.1) umfasst, wobei die abgewandte Fläche (12.1, 22.1) zumindest teilweise mit einer Ummantelung (14, 24) ummantelt ist, wobei die Ummantelung (14, 24) eine metallische Ummantelung ist oder einen duroplastisch- thermoplastischer Kunststoff oder ein Elastomer-Kunststoff umfasst.

**12.** Verfahren gemäß Anspruch 8, wobei die Einbuchtungen (26H) halbkugelförmig oder halbzylinderförmig ausgebildet sind.

**Claims**

**1.** Insulation system (1, 21) for thermoacoustic insulation of an exhaust gas component (200, 202) to be insulated, comprising:

a fiber molded part (12, 22) having a surface (12.1, 22.1) facing away from the exhaust gas component (200, 202) to be insulated, wherein the surface (12.1, 22.1) facing away is at least in part jacketed with a cladding (14, 24), and having an insulation surface (12.2, 22.2) facing the exhaust gas component (200, 202) to be insulated, wherein the fiber molded part (12, 22) is applicable to the exhaust gas component (200, 202) to be insulated in such a way, that a plurality of closed cavities (16, 26) are formed between a portion of the insulation surface (12.2, 22.2) of said fiber molded part (12, 22) and the component (200, 202) to be insulated; wherein a predefined proportion of the insulation surface (12.2, 22.2) of the fiber molded part (12, 22) is in contact with the exhaust gas component (200, 202) to be insulated, wherein the predefined proportion amounts to at least 10% and at most 90%, in particular at least 25% and at most 55%; wherein the insulating surface (12.2, 22.2) facing the exhaust gas component (200, 202) to be insulated comprises one or more predefined indentations (26H).

**2.** Insulation system (1, 21) according to claim 1, wherein the insulating surface (12.2, 22.2) of said fiber molded part is coated with colored pigments which have a TSR, total solar reflectance, value of at least 65%, wherein the percentage of the colored pigments relative to a total mass of said fiber molded part amounts to between 1-5%, preferably between 1.5-3%.

**3.** Insulation system (1, 21) according to claim 1, wherein in between the insulation surface (12.2, 22.2) of the fiber molded part (12, 22) and the exhaust gas component (200, 202) to be insulated an inner liner is inserted, wherein preferably, the inner liner is a metallic inner liner.

**4.** Insulation system (1, 21) according to at least one of claims 1 - 3, wherein the cladding (14, 24) comprises a metallic cladding or duroplastic-thermoplastic plastic or elastomeric plastic.

**5.** Insulation system (1, 21) according to claim 1, wherein the indentations (26H) are semi-spherical and/or semi-cylindrical indentations so that the cavities (26) are formed to be semi-spherical and/or semi- cylindrical in shape.

**6.** Exhaust gas component having an insulation arranged at least in part on the component (200, 202), wherein the insulation is configured as an insulation system (1, 21) according to one of claims 1 - 5.

**7.** Silencer comprising at least one exhaust gas component according to claim 6.

**8.** Method for thermoacoustic insulation of an exhaust gas component, said method comprising the steps of:

providing a fiber molded part (12, 22) having a surface facing away from the exhaust gas component (200, 202) to be insulated, wherein the surface (12.1, 22.1) facing away is at least in part jacketed with a cladding (14, 24), and having an insulation surface (12.2, 22.2) facing the exhaust gas component; applying the fiber molded part (12, 22) to the exhaust gas component (200, 202) such that a plurality of closed cavities (16, 26) are formed between a portion of the insulation surface of said fiber molded part (12, 22) and the component (200, 202) to be insulated; wherein a predefined proportion of the insulation surface of (12.2, 22.2) the fiber molded part (12, 22) is in contact with the exhaust gas component (200, 202) to be insulated, wherein the predefined proportion amounts to at least 10% and at most 90%, in particular at least 25% and at most 55%; wherein the insulating surface (12.2, 22.2) facing the exhaust gas component (200, 202) to be insulated comprises one or more predefined indentations (26H).

**9.** Method according to claim 8, wherein the insulating surface (12.2, 22.2) of the fiber molded part (12, 22) is coated with colored pigments which have a TSR, total solar reflectance, value of at least 65%, where a percentage of the colored pigments relative to a total mass of the fiber molded part amounts to between 1-5%, preferably between 1.5-3 %.

10. Method according to claim 8 or 9, wherein in between the insulation surface (12.2, 22.2) of the fiber molded part (12, 22) and the exhaust gas component (200, 202) to be insulated an inner liner is inserted, wherein preferably, the inner liner is a metallic inner liner.

11. Method according to at least one of claims 8 - 10, wherein the fiber molded part (12, 22) further comprises a surface (12.1, 22.1) facing away from the exhaust gas component (200, 202) to be insulated , wherein the surface (12.1, 22.1) facing away is at least in part jacketed with a cladding (14, 24), wherein the cladding (14, 24) comprises a metallic cladding or duroplastic-thermoplastic plastic or elastomeric plastic..

12. Method according to claim 8, wherein the indentations (26H) are semi-spherical and/or semi-cylindrical indentations.

## Revendications

1. Système d'isolation (1, 21) pour l'isolation thermo-acoustique d'un composant d'échappement (200, 202), comprenant
une pièce de forme en fibres (12, 22), qui comporte une surface (12.1, 22.1) éloignée du composant d'échappement (200, 202) à isoler, à savoir opposée à celle dirigée vers le composant d'échappement, ladite surface éloignée (12.1, 22.1) étant enveloppée au moins partiellement par une enveloppe (14, 24), et qui comporte une surface d'isolation (12.2, 22.2) dirigée vers le composant d'échappement (200, 202) à isoler, la pièce de forme en fibres (12, 22) pouvant être appliquée sur le composant d'échappement (200, 202) à isoler de manière telle, qu'entre une partie de la surface d'isolation (12.2, 22.2) de la pièce de forme en fibres (12, 22) et le composant d'échappement (200, 202) à isoler, soient formées plusieurs cavités fermées (16, 26) ;
système d'isolation
dans lequel une fraction prédéfinie de la surface d'isolation (12.2, 22.2) de la pièce de forme en fibres (12, 22) vient contacter le composant d'échappement (200, 202) à isoler, ladite fraction prédéfinie valant au minimum 10% et au maximum 90%, notamment au minimum 25% jusqu'à au maximum 55% ; et
dans lequel la surface d'isolation (12.2, 22.2), qui est dirigée vers le composant d'échappement (200, 202) à isoler, présente plusieurs creux prédéfinis (26H).

2. Système d'isolation (1, 21) selon la revendication 1, dans lequel la surface d'isolation (12.2, 22.2) de la pièce de forme en fibres est revêtue de pigments de couleur, qui présentent une valeur TSR, Total Solar Reflectance, d'au moins 65%, la fraction des pigments de couleur relative à la masse totale de la pièce de forme en fibres se situant entre 1 - 5%, de préférence entre 1,5 - 3%.

3. Système d'isolation (1, 21) selon la revendication 1, dans lequel entre la surface d'isolation (12.2, 22.2) de la pièce de forme en fibres (12, 22) et le composant d'échappement (200, 202) à isoler, est inséré un chemisage intérieur, concernant lequel il s'agit de préférence d'un chemisage intérieur métallique.

4. Système d'isolation (1, 21) selon l'une au moins des revendications 1 - 3, dans lequel l'enveloppe (14, 24) comprend une enveloppe métallique ou bien une matière plastique thermoplastique-thermodurcissable ou bien encore une matière plastique élastomère.

5. Système d'isolation (1, 21) selon la revendication 1, dans lequel les creux (26H) sont des creux de forme demi-sphérique et/ou demi-cylindrique, de sorte que les cavités fermées (26) peuvent être réalisées avec une forme demi-sphérique et/ou une forme demi-cylindrique.

6. Composant d'échappement comprenant une isolation agencée au moins partiellement sur le composant d'échappement (200, 202), l'isolation étant réalisée en tant que système d'isolation (1, 21) selon l'une des revendications 1 - 5.

7. Silencieux comprenant au moins un composant d'échappement selon la revendication 6.

8. Procédé pour l'isolation thermo-acoustique d'un composant d'échappement, comprenant les étapes suivantes :

fourniture et préparation d'une pièce de forme en fibres (12, 22), qui comporte une surface éloignée du composant d'échappement (200, 202) à isoler, à savoir opposée à celle dirigée vers le composant d'échappement, ladite surface éloignée (12.1, 22.1) étant enveloppée au moins partiellement par une enveloppe (14, 24), et qui comporte une surface d'isolation (12.2, 22.2) dirigée vers le composant d'échappement à isoler ;
application de la pièce de forme en fibres (12, 22) sur le composant d'échappement de manière telle, qu'entre une partie de la surface d'isolation (12.2, 22.2) de la pièce de forme en fibres (12, 22) et le composant d'échappement (200, 202) à isoler, soient formées plusieurs cavités fermées (16, 26) ;

procédé

d'après lequel une fraction prédéfinie de la surface d'isolation (12.2, 22.2) de la pièce de forme en fibres (12, 22) vient contacter le composant d'échappement (200, 202) à isoler, ladite fraction prédéfinie valant au minimum 10% et au maximum 90%, notamment au minimum 25% jusqu'à au maximum 55% ; et

d'après lequel la surface d'isolation (12.2, 22.2), qui est dirigée vers le composant d'échappement (200, 202) à isoler, présente plusieurs creux prédéfinis (26H).

9. Procédé selon la revendication 8, d'après lequel la surface d'isolation (12.2, 22.2) de la pièce de forme en fibres (12, 22) est revêtue de pigments de couleur, qui présentent une valeur TSR, Total Solar Reflectance, d'au moins 65%, la fraction des pigments de couleur relative à la masse totale de la pièce de forme en fibres se situant entre 1 - 5%, de préférence entre 1,5 - 3%.

10. Procédé selon la revendication 8 ou la revendication 9, d'après lequel entre la surface d'isolation (12.2, 22.2) de la pièce de forme en fibres (12, 22) et le composant d'échappement (200, 202) à isoler, est inséré un chemisage intérieur, concernant lequel il s'agit de préférence d'un chemisage intérieur métallique.

11. Procédé selon l'une au moins des revendications 8 - 10, d'après lequel la pièce de forme en fibres (12, 22) comporte par ailleurs, une surface (12.1, 22.1) éloignée du composant d'échappement (200, 202) à isoler, à savoir opposée à celle dirigée vers le composant d'échappement, ladite surface éloignée (12.1, 22.1) étant enveloppée au moins partiellement par une enveloppe (14, 24), et l'enveloppe (14, 24) étant une enveloppe métallique ou bien comprenant une matière plastique thermoplastique-thermodurcissable ou bien une matière plastique élastomère.

12. Procédé selon la revendication 8, d'après lequel les creux (26H) sont réalisés de forme demi-sphérique et/ou de forme demi-cylindrique.

1

12    12.1    14    16

B    12.2    A

200

FIG. 1

FIG. 2A

FIG. 2B

FIG. 3

FIG. 4

FIG. 5

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 1020100660071 A1
- US 2009197044 A1
- US 2010035078 A1
- EP 2444617 A1
- EP 2444616 A1
- AT 133379 B